# EUROPEAN PATENT SPECIFICATION

(11) **EP 3 108 731 B1**
(45) Date of publication and mention of the grant of the patent: **19.09.2018**
(21) Application number: 15173065.2
(22) Date of filing: 22.06.2015
(51) Int. Cl.: A01C 7/04, A01C 19/02

(54) **DIRECT DRIVE SEED METERING DEVICE**
DIREKTANTRIEBS-SAATGUTVEREINZELUNGSVORRICHTUNG
DISPOSITIF DE DOSAGE DE GRAINES A ENTRAINEMENT DIRECT

(43) Date of publication of application: 28.12.2016
(73) Proprietor: Gentili, Jorge Alberto, S2919BNO Santa Fe (AR)
(72) Inventor: Gentili, Jorge Alberto, S2919BNO Santa Fe (AR)
(74) Representative: Nordmeyer, Philipp Werner

(56) References cited:
- EP-A1- 1 310 147
- WO-A1-2012/142607
- WO-A1-2015/106079
- FR-A1- 2 706 236
- US-A- 3 990 606
- US-A1- 2015 122 163

## Description

### FIELD OF THE INVENTION

The present invention refers to a direct drive seed metering device and more specifically to a seed metering device for sowing machines, driven by a coaxial motor, comprising a seed metering disc for capturing seeds from a reservoir and laying them in a controlled manner in a furrow in the soil, wherein the coaxial motor couples directly to the metering disc without the need for intermediate transmission elements, redactors, gears or timing belts, thus increasing the efficiency of the device.

In preferred embodiments of the present invention, the means for capturing and releasing the seeds is operated by either vacuum or high pressure.

The direct drive seed metering device of the present invention comprises a toroidal motor with a hollow rotor shaft, preferably an electric DC motor, through which the seed capturing means can be fluidly connected to vacuum or pressure generating means.

### BACKGROUND OF THE INVENTION

Row crop sowing machines or seed planters for single seed sowing have been widely used for decades. Usually, said machines comprise at least one rotating disc for holding and supplying the seeds to be planted and means for releasing and conducting the seeds to the furrows on the ground at determined depths and spacing.

The rotating discs usually comprise holes, pockets, cradles or teeth for retaining the seeds with the help of vacuum or positive air pressure that is interrupted at a desired point in order to let the seeds drop into conducting means to the ground.

Most known sowing machines comprising a plurality of metering discs rely on only one driving assembly for simultaneously rotating all discs. In case of machines comprising a large number of metering discs, e.g. 20 or more, said driving assembly is bulky, complicated and expensive, not allowing the individual adjustment of the rotation of each metering disc, necessary in occasions when the sowing machine is not supposed to follow a rectilinear path, wherein the more external sowing devices run for a longer distance than the more internal ones.

Such drawbacks were addressed by the use of hydraulic systems for driving individually each disc, comprising sophisticated electronic control means, requiring both expensive and continuous maintenance.

Some late developments in sowing machines, replaced said hydraulic systems by individual electric motors, leading to much simpler and economic equipment, as particularly disclosed in patent application WO 2012/142607 A1 where the motors are connected to the axles of the metering discs. Nevertheless, there is still a need for simpler metering devices, with reduced power requirements, and less expensive building and maintenance.

### BRIEF DESCRIPTION OF THE INVENTION

The above mentioned drawbacks can be overcome and said needs fulfilled by a seed metering device according to claim 1. The application of a motor directly coupled to the seed metering disc of the seed metering device of the invention reduces the need for reductions, gear transmissions, belt transmission and other auxiliary transmission components found in seed metering devices known in the art. This reduction or complete elimination of mechanical transmissions elements between the power source and the load implies a substantial reduction in power loss, which in turn results in improvement in power output, reduced noise and vibrations, and all around greater efficiency. Additionally, the reduction or elimination of auxiliary transmission elements greatly reduces maintenance costs and complexity, while also improving the device operational life.

Furthermore, the slim design of the high torque, annular motor allows for the motor to be arranged partially or completely within the seed meter housing, reducing the overall size of the device and partially or completely protecting the motor from outside elements.

Therefore, it is an object of the present invention to provide a seed metering device for row crop sowing machines, also called seed planters, comprising:
- a seed metering disc rotatable about a central shaft, having a plurality of seed capturing and retaining means for capturing and retaining the seeds,
- a motor, which drives the seed metering disc,
- releasing means for releasing the seeds from the seed capturing and retaining means,
- conducting means for conducting the released seeds onto the ground, and
- a housing for containing and protecting the metering disc,
wherein the motor is of the hollow-shaft type, toroidally shaped and coaxially coupled to the metering disc.

In a preferred embodiment of the present invention, the hollow-shaft motor is a direct drive DC motor of the brushless type.

In a preferred embodiment of the present invention, the seed capturing and retaining means are selected from the group comprising holes, cells or cradles located near the outer perimeter of the metering disc.

In a preferred embodiment of the present invention, the seed capturing and retaining means consist of holes located near the outer perimeter of the metering disc and the hole size is determined by the type of seed to be sown, so as to be able to retain the seeds in place until reaching the releasing means.

In a preferred embodiment of the present invention, the metering disc is a cogwheel or gear, the teeth of which are the seed capturing and retaining means, where the teeth shape and the size of the gap between the teeth being determined by the type of seed to be sown, so as to be able to retain the seeds in place until reaching the releasing means.

In a preferred embodiment of the present invention, the housing containing the metering disc forms a vacuum chamber together with one of the faces of the metering disc, the device being provided with vacuum generating means for lowering the air pressure on said face of the metering disc so as to capture and retain the seeds within the seed capturing and retaining means arranged on the face of the metering disc opposite the vacuum chamber.

In a preferred embodiment of the present invention, the housing containing the metering disc forms a high pressure chamber together with one of the faces of the metering disc , the device being provided with blowing means for increasing air pressure on said face of the metering disc so as to capture and retain the seeds within the seed capturing and retaining means arranged on the same face of the metering disc.

In a preferred embodiment of the present invention, the device further comprises a flexible sealing member contained within the housing, which is sealingly attached to the inner wall of the housing and which is sealingly pressed against one face of the metering disc, thus defining a vacuum chamber, the device being provided with vacuum generating means for lowering the air pressure on said vacuum chamber so as to capture and retain the seeds within the seed capturing and retaining means arranged on the face of the metering disc opposite the vacuum chamber.

In a preferred embodiment of the present invention, the device further comprises
- a concave plate within the housing, sealingly attached to one face of the seed metering disc, and coupled to the hollow shaft of the motor, thus defining a rotatable vacuum chamber,
- vacuum generating means,
- a non-rotatable tube or conduit, non-rotatably attached to the housing, which passes through the housing and the hollow shaft of the motor into the rotatable vacuum chamber, fluidly connecting the vacuum means to the rotatable vacuum chamber.

In a preferred embodiment of the present invention, the motor is coupled to the seed metering disc by means of a hollow hub or other suitable coupling means comprising a hollow shaft or tube, and wherein the hollow hub is perforated, fluidly connecting the high pressure chamber or the vacuum chamber, where appropriate, to the hollow motor shaft of the motor coupled to said hollow hub.

In a preferred embodiment of the present invention, the vacuum generating means or the blowing means are fluidly connected to the vacuum chamber or the high pressure chamber, where appropriate, through the hollow motor shaft of the motor and through the perforated hollow hub.

In a preferred embodiment of the present invention, the vacuum generating means or the blowing means are fluidly connected to said vacuum chamber or high pressure chamber, where appropriate, through an opening or orifice in the housing in a position other than the hollow shaft -eccentrically regarding the metering disc- and wherein the coupling means coupling the motor to the seed metering disk does not allow fluid connection between the vacuum chamber or high pressure chamber, where appropriate, and the hollow shaft of the motor.

In a preferred embodiment of the present invention, the releasing means comprises a plate, fixed to the non-rotatable tube or conduit and located within the rotatable vacuum chamber, which makes contact with a region of the face of the metering disc inside the rotatable vacuum chamber, blocking the orifices of the seed capturing and retaining means and therefore interrupting the vacuum applied to the seeds retained on the other face of the metering disk, making them drop into the conducting means towards the ground.

In a preferred embodiment of the present invention, the vacuum chamber does not simultaneously overlap with all the seed capturing and retaining means of the metering disc and wherein the release of the seeds from the holes of the seed capturing and retaining means occurs when a particular hole of the seed retaining means no longer overlaps with the vacuum chamber.

In a preferred embodiment of the present invention, the seed releasing means comprises a rotatable wheel contacting the metering disc on the face opposite the seeds capturing and retaining means, the wheel blocking the holes of the seed capturing and retaining means and therefore interrupting the vacuum or pressure applied to the retained seeds, making them drop into the conducting means towards the ground.

In a preferred embodiment of the present invention, the motor is housed within the housing, fixed to the inner surface of the housing wall.

In a preferred embodiment of the present invention, the motor is fixed to the outer surface of the housing wall.

In a preferred embodiment of the present invention, the seed releasing means comprise stationary or mobile brushes that physically remove the seeds from the seed capturing and retaining means.

In a preferred embodiment of the present invention, the device further comprises singulating means for allowing only one seed to be retained in each capturing and retaining means.

In a preferred embodiment of the present invention, the singulating means comprise a plate, parallel to the metering disc and spaced apart so as to allow only one seed to be retained in each capturing and retaining means.

In a preferred embodiment of the present invention, the conducting means for conducting the released seeds onto the ground comprises a conveyor belt provided with bristles for guiding the seeds to an outlet close to the soil and into an opened furrow in the soil.

In a preferred embodiment of the present invention, the conducting means for conducting the released seeds onto the ground comprises a tube for allowing the seeds to freely reach the soil by gravity, into an opened furrow in the soil.

In a preferred embodiment of the present invention, the seed capturing and retaining means of the seed metering disc comprises holes and the housing comprises a rotatable toothed wheel with a plurality of teeth or projections, that engage with said holes of the seed capturing and retaining means as the disc rotates, removing obstructions and releasing seeds stuck in said holes.

In a preferred embodiment of the present invention, the motor is a large diameter annular torque motor with an annular rotor.

### BRIEF DESCRIPTION OF THE DRAWINGS

Figure 1 is an exploded perspective view of a vacuum seed metering device wherein the vacuum generating means are connected to the housing through the hollow motor shaft, according to a first embodiment of the present invention;
Figure 2 is a schematic cross-section side view of the vacuum seed metering device of Figure 1;
Figure 3 is an exploded perspective view of a pressure seed metering device wherein the blowing means are connected to the housing through the hollow motor shaft, according to a second embodiment of the present invention;
Figure 4 is a schematic cross-section side view of the pressure seed metering device of Figure 3;
Figure 5 is an exploded perspective view of a vacuum seed metering device wherein the vacuum generating means are connected to the housing through an air extraction conduit, according to a third embodiment of the present invention;
Figure 6 is a schematic cross-section side view of the vacuum seed metering device of Figure 5;
Figure 7 is an exploded perspective view of a pressure seed metering device wherein the blowing means are connected to the housing through an air intake conduit, according to a fourth embodiment of the present invention;
Figure 8 is a schematic cross-section side view of the vacuum seed metering device of Figure 7;
Figure 9 is an exploded perspective view of a vacuum seed metering device comprising a vacuum chamber, according to a fifth embodiment of the present invention;
Figure 10 is a schematic cross-section side view of the vacuum seed metering device of Figure 9;
Figure 11 is an exploded perspective view of a vacuum seed metering device comprising a rotating vacuum chamber, according to a sixth embodiment of the present invention;
Figure 12 is a schematic cross-section side view of the vacuum seed metering device of Figure 11;
Figure 13 is an exploded perspective view of a vacuum seed metering device comprising a vacuum chamber connected to the vacuum generating means through the hollow motor shaft, according to a seventh embodiment of the present invention;
Figure 14 is a schematic cross-section side view of the vacuum seed metering device of Figure 13;
Figure 15 is an exploded perspective view of a pressure seed metering device comprising a large diameter torque motor with an annular rotor, wherein the pressure generating means are connected to the housing through the annular rotor of the torque motor, according to an eighth embodiment of the present invention;
Figure 16 is a schematic cross-section side view of the pressure seed metering device of Figure 15;
Figure 17 is an exploded perspective view of a vacuum seed metering device comprising a large diameter torque motor with an annular rotor, wherein the vacuum generating means are connected to the housing through the annular rotor of the torque motor, according to a ninth embodiment of the present invention;
Figure 18 is a schematic cross-section side view of the vacuum seed metering device of Figure 17;

### DEFINITIONS

To the effects of the present invention, the terms "fluid connection", "fluidly connected", "fluidly coupled" and variations of the same are meant to be understood as connection or couplings that allow or maintain the flow of fluids, and more particularly air, between the connected elements.

For all of the embodiments described in the present invention, and any other embodiment within the scope of the present invention, the term "atmospheric pressure chamber" is meant to the be understood as making reference to a chamber that is neither the high pressure chamber nor the vacuum chamber. In some embodiments of the present invention, the "atmospheric pressure chamber" may be fluidly connected to the exterior of the device through suitable fluid connection means, such as holes or conduits. Regardless of the above, the "atmospheric pressure chamber" may not be actually be at atmospheric pressure, but instead is used to identify said chamber from the vacuum chamber or highpressure chamber respectively. More specifically, it refers to the chamber that is at a higher pressure than the vacuum chamber in vacuum seed metering devices, or the chamber that is at lower pressure than the high pressure chamber in high pressure seed metering devices.

Likewise, the term "vacuum" is meant to be understood as a pressure that is lower than the pressure in the atmospheric pressure chamber, and the term "high pressure" is meant to be understood as a pressure that is higher than the pressure in the

The terms "toroidal motor", "annular rotor" and "torque motor" refer to electrical motors whose rotor comprises a passing hole or orifice about its central axis.

### DETAILED DESCRIPTION OF THE INVENTION

The invention will be described in more detail below, with reference to the accompanying drawings that illustrate different exemplary embodiments of the present invention.

For all of the following embodiments, while the hollow shaft electric motor of embodiments 1 to 7 and the large diameter torque motor of claims 8 to 9 can be of any type of suitable electric motor with a hollow motor shaft, preferred embodiments of the present invention utilize brushless DC electric motors.

### Embodiment 1

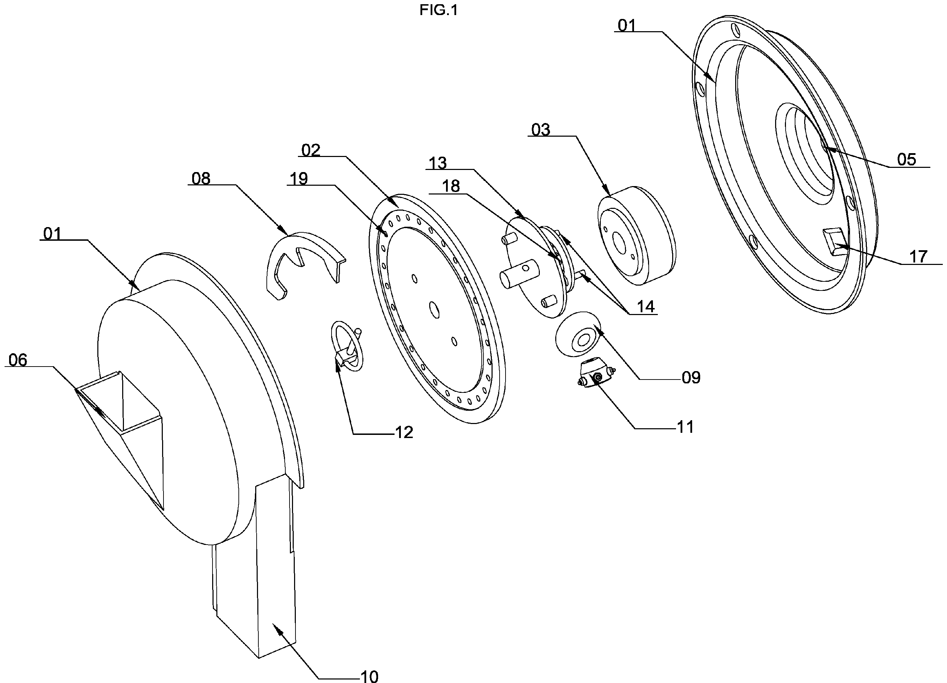

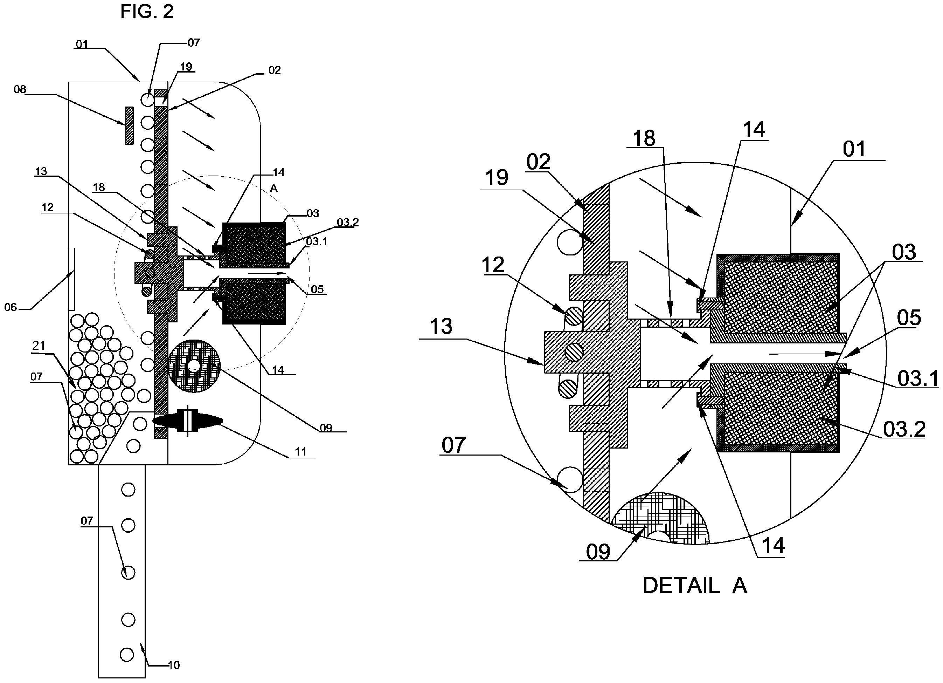

Figures 1 and 2 show a vacuum seed metering device according to a first embodiment of the present invention. Said vacuum seed metering device comprises a cylindrical housing 01, which houses a rotating metering disc 02 coupled about its central axis to a hollow rotor shaft 03.1 of a coaxially arranged motor 03 by means of a hollow hub 13 or other suitable coupling means which allow the passage of air through it. The stator 03.2 of the motor 03 is fixed to the interior of the housing 01 by suitable fastening means (not shown). The hollow hub 13 is coupled to the hollow motor shaft 03.1 by rods or pins 14 or other suitable fastening means. The metering disc 02 is coupled to the hollow hub 13 by a cotter pin 12 or other suitable securing means.

The metering disc 02 divides the housing 01 into two chambers; a vacuum chamber, fluidly connected to a vacuum generation means (not shown), and an atmospheric pressure chamber. Seeds 07 are loaded into a reservoir 21 within the atmospheric pressure chamber through a seed inlet 06, which may or may not comprise a hopper and/or closure means (not shown). Vacuum is created in the vacuum chamber by the extraction of air in said chamber by means of a vacuum generating means (not shown) through an air extraction outlet 05. Fluid connection between the vacuum generating means and the vacuum chamber in the housing 01 is achieved through a plurality of orifices or holes 18 in the hollow hub 13 which connects the hollow motor shaft 03.1 of the motor 03 to the metering disc 02. In turn, the hollow motor shaft 03.1 is fluidly connected to the air extraction outlet 05, which is connected to the vacuum generating means (not shown).

The metering disc 02 comprises a plurality of radially spaced holes 19 or other suitable seed retaining means on its outer region. The holes 19 utilize the vacuum generated in the vacuum chamber by the vacuum generating means to capture seeds 07 from the seed reservoir 21 and retain them until the vacuum is interrupted by a wheel 09 or other suitable seed releasing means, releasing the seed 07 from the holes 19 of the metering disc 02, preferably into a seed outlet 10.

In a preferred embodiment the wheel 09 comprises a device arranged to block or isolate the affected holes 19 from the vacuum generated by the vacuum generating means, causing the seed to be released from said affected hole 19. Preferably, the wheel 09 is made from a flexible material, like rubber or other polymeric material, and located on the side of the metering disc 02 opposite to the seeds 07, which can isolate a particular hole 19 from the vacuum source.

The embodiment further comprises a suitable curved plate 08 or other singulating means to prevent the simultaneous retention and discharge of two or more seeds 07 from a single hole 19, by removing excess seeds and returning them to the seed reservoir 21. Additionally, the embodiment further comprises a toothed wheel 11 with a plurality of teeth or projections, or other suitable auxiliary ejector means, arranged in a cavity 17 within the housing 01, which doubles both as a cleaning device for cleaning and removing obstructions in the holes 19 and as an auxiliary means for releasing seeds 07 not properly released by the seed releasing wheel 09. Preferably, the toothed wheel 11 is made from flexible material, like rubber or other polymeric material.

In operation, seeds 07 captured by the metering disc 02, and not removed by the curved plate 08, are carried over to the wheel 09, which in turn releases the seeds 07 from the metering disc 02 and allows them to freely fall through a seed outlet 10, through a conducting means to an opened furrow on the soil or another section of the seeding equipment.

### Embodiment 2

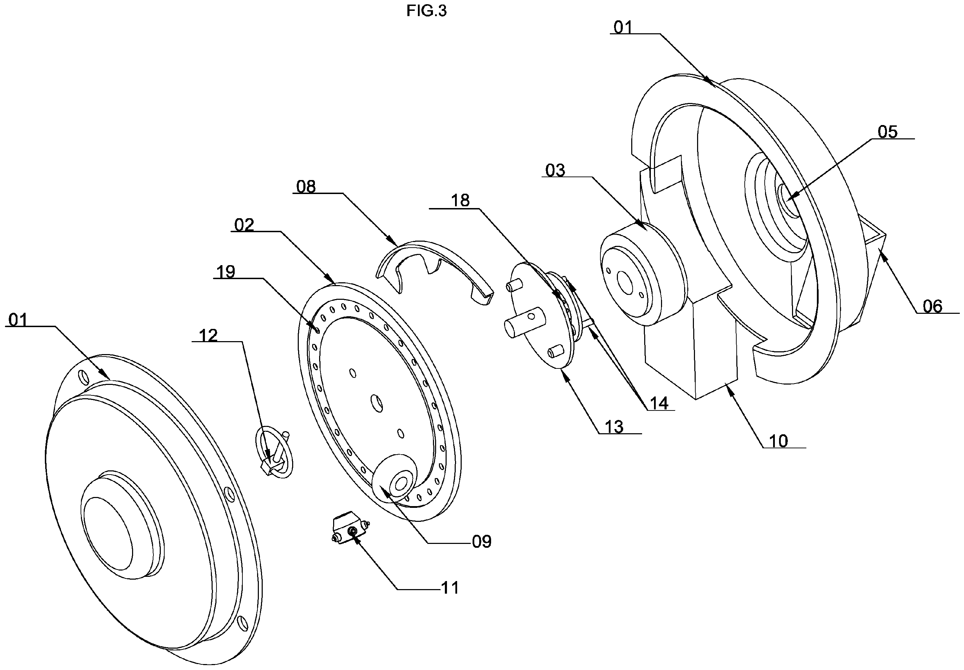

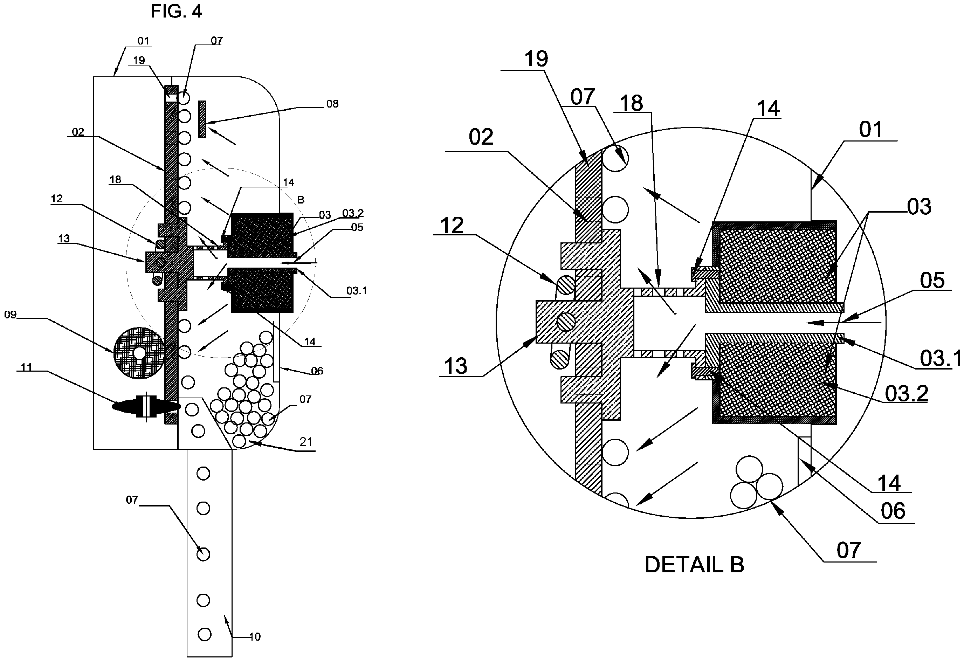

Figures 3 and 4 show a pressure seed metering device according to a second embodiment of the present invention. Said pressure seed metering device comprises a cylindrical housing 01, which houses a rotating metering disc 02 coupled about its central axis to a hollow rotor shaft 03.1 of a coaxially arranged motor 03 by means of a hollow hub 13 or other suitable coupling means which allow the passage of air through it. The stator 03.2 of the motor 03 is fixed to the interior of the housing 01 by suitable fastening means (not shown). The hollow hub 13 is coupled to the hollow motor shaft 03.1 by rods or pins 14 or other suitable fastening means. The metering disc 02 is coupled to the hollow hub 13 by a cotter pin 12 or other suitable securing means.

The metering disc 02 divides the housing 01 into two chambers; a positive pressure chamber, fluidly connected to a blowing means (not shown), and an atmospheric pressure chamber. Seeds 07 are loaded into a reservoir 21 within the positive pressure chamber through a seed inlet 06, which may or may not comprise a hopper and comprises sealing means (not shown). Pressure is created in the positive pressure chamber by the pressurization of air in said chamber by means of a blowing means (not shown), such as an air compressor, through a pressurized air inlet 05. Fluid connection between the blowing means and the positive pressure chamber in the housing 01 is achieved through a plurality of orifices or holes 18 in the hollow hub 13 which connects the hollow motor shaft 03.1 of the motor 03 to the metering disc 02. In turn, the hollow motor shaft 03.1 is fluidly connected to the pressurized air inlet 05, which is connected to the blowing means (not shown).

The metering disc 02 comprises a plurality of radially spaced holes 19 or other suitable seed retaining means on its outer region. The holes 19 utilize the pressure generated in the positive pressure chamber by the blowing means to capture seeds 07 from the seed reservoir 21 and retain them until the pressure is interrupted by a wheel 09 or other suitable seed releasing means, releasing the seed 07 from the holes 19 of the metering disc 02, preferably into a seed outlet 10.

In a preferred embodiment the wheel 09 comprises a device arranged to block or isolate the affected holes 19 from the pressure generated by the blowing means, causing the seed to be released from said affected hole 19. Preferably, the wheel 09 is made from a flexible material, like rubber or other polymeric material, and located on the side of the metering disc 02 opposite to the seeds 07, which can isolate a particular hole 19 from the pressure source.

The embodiment further comprises a suitable curved plate 08 or other singulating means to prevent the simultaneous retention and discharge of two or more seeds 07 from a single hole 19, by removing excess seeds and returning them to the seed reservoir 21. Additionally, the embodiment further comprises a toothed wheel 11 with a plurality of teeth or projections, or other suitable auxiliary ejector means, arranged in a cavity (not shown) within the housing 01, which doubles both as a cleaning device for cleaning and removing obstructions in the holes 19 and as an auxiliary means for releasing seeds 07 not properly released by the seed releasing wheel 09. Preferably, the toothed wheel 11 is made from flexible material, like rubber or other polymeric material.

In operation, seeds 07 captured by the metering disc 02, and not removed by the curved plate 08, are carried over to the wheel 09, which in turn releases the seeds 07 from the metering disc 02 and allows them to freely fall through a seed outlet 10, through a conducting means to an opened furrow on the soil or another section of the seeding equipment.

### Embodiment 3

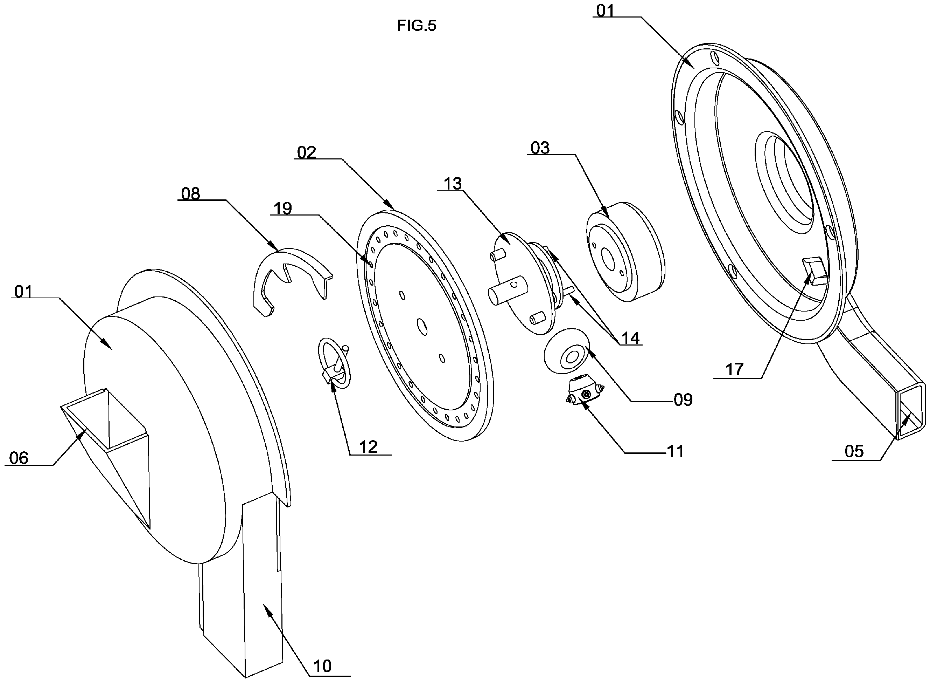

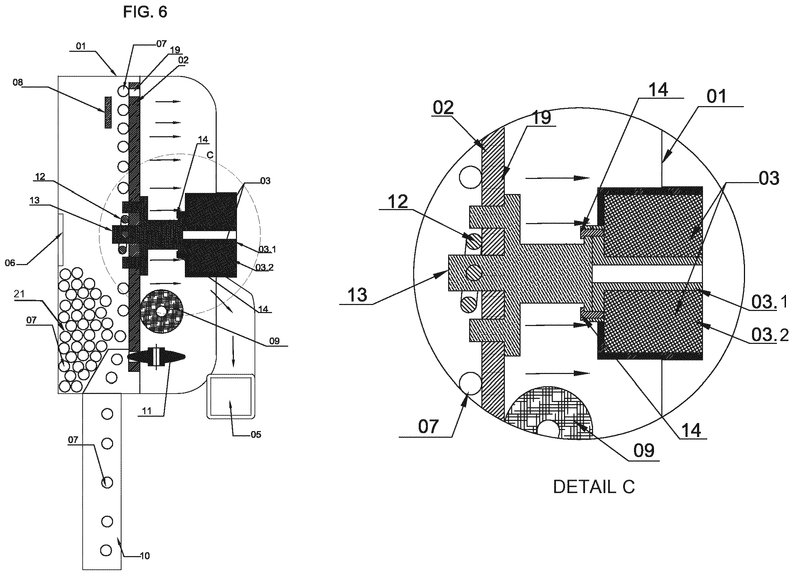

Figures 5 and 6 show a vacuum seed metering device according to a third embodiment of the present invention. Said vacuum seed metering device comprises a cylindrical housing 01, which houses a rotating metering disc 02 coupled about its central axis to a hollow rotor shaft 03.1 of a coaxially arranged motor 03 by means of a hub 13 or other suitable coupling means. The stator 03.2 of the motor 03 is fixed to the interior of the housing 01 by suitable fastening means (not shown). The hub 13 is coupled to the hollow motor shaft 03.1 by rods or pins 14 or other suitable fastening means. The metering disc 02 is coupled to the hub 13 by a cotter pin 12 or other suitable securing means.

The metering disc 02 divides the housing 01 into two chambers; a vacuum chamber, fluidly connected to a vacuum generation means (not shown), and an atmospheric pressure chamber. Seeds 07 are loaded into a reservoir 21 within the atmospheric pressure chamber through a seed inlet 06, which may or may not comprise a hopper and/or closure means (not shown). Vacuum is created in the vacuum chamber by the extraction of air in said chamber by means of a vacuum generating means (not shown) coupled to an air extraction outlet 05 formed on or attached to the housing 01, fluidly connecting the vacuum generating means to said vacuum chamber. The hub 13 further provides a fluid seal over the hollow motor shaft 03.1 of the motor 03, preventing fluid circulation of air through the hollow shaft 03.1 from and to the housing 01.

The metering disc 02 comprises a plurality of radially spaced holes 19 or other suitable seed retaining means on its outer region. The holes 19 utilize the vacuum generated in the vacuum chamber by the vacuum generating means to capture seeds 07 from the seed reservoir 21 and retain them until the vacuum is interrupted by a wheel 09 or other suitable seed releasing means, releasing the seed 07 from the holes 19 of the metering disc 02, preferably into a seed outlet 10.

In a preferred embodiment the wheel 09 comprises a device arranged to block or isolate the affected holes 19 from the vacuum generated by the vacuum generating means, causing the seed to be released from said affected hole 19. Preferably, the wheel 09 is made from a flexible material, like rubber or other polymeric material, and located on the side of the metering disc 02 opposite to the seeds 07, which can isolate a particular hole 19 from the vacuum source.

The embodiment further comprises a suitable curved plate 08 or other singulating means to prevent the simultaneous retention and discharge of two or more seeds 07 from a single hole 19, by removing excess seeds and returning them to the seed reservoir 21. Additionally, the embodiment further comprises a toothed wheel 11 with a plurality of teeth or projections, or other suitable auxiliary ejector means, arranged in a cavity 17 within the housing 01, which doubles both as a cleaning device for cleaning and removing obstructions in the holes 19 and as an auxiliary means for releasing seeds 07 not properly released by the seed releasing wheel 09. Preferably, the toothed wheel 11 is made from flexible material, like rubber or other polymeric material.

In operation, seeds 07 captured by the metering disc 02, and not removed by the curved plate 08, are carried over to the wheel 09, which in turn releases the seeds 07 from the metering disc 02 and allows them to freely fall through a seed outlet 10, through a conducting means to an opened furrow on the soil or another section of the seeding equipment.

### Embodiment 4

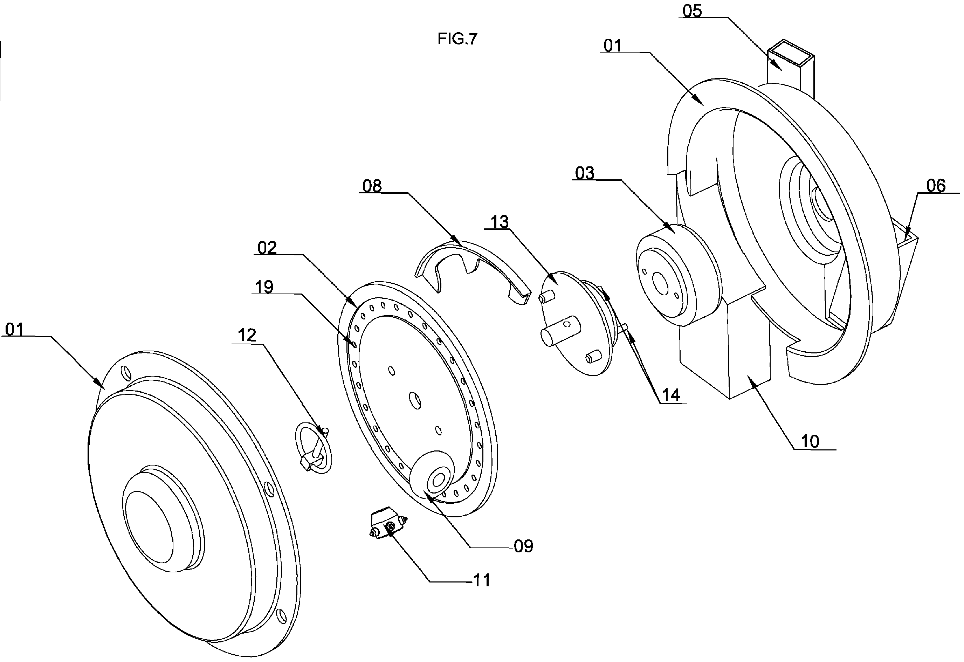

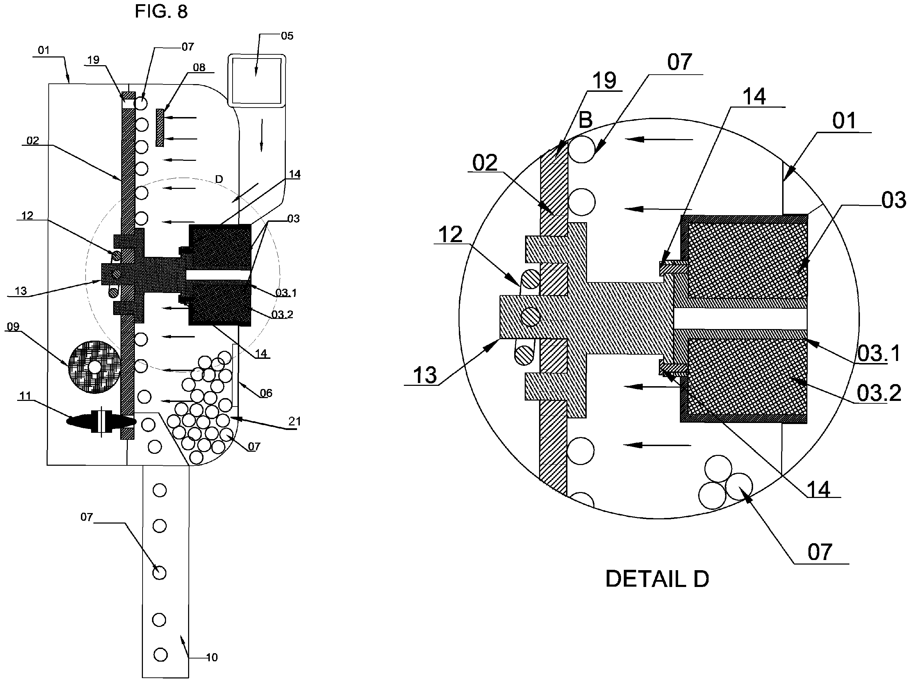

Figures 7 and 8 show a pressure seed metering device according to a fourth embodiment of the present invention. Said pressure seed metering device comprises a cylindrical housing 01, which houses a rotating metering disc 02 coupled about its central axis to a hollow rotor shaft 03.1 of a coaxially arranged motor 03 by means of a hub 13 or other suitable coupling means. The stator 03.2 of the motor 03 is fixed to the interior of the housing 01 by suitable fastening means (not shown). The hub 13 is coupled to the hollow motor shaft 03.1 by rods or pins 14 or other suitable fastening means. The metering disc 02 is coupled to the hub 13 by a cotter pin 12 or other suitable securing means.

The metering disc 02 divides the housing 01 into two chambers; a positive pressure chamber, fluidly connected to a blowing means (not shown), and an atmospheric pressure chamber. Seeds 07 are loaded into a reservoir 21 within the positive pressure chamber through a seed inlet 06, which may or may not comprise a hopper and comprises sealing means (not shown). Pressure is created in the positive pressure chamber by the pressurization of air in said chamber by means of a blowing means (not shown), such as an air compressor, through a pressurized air inlet 05 formed on or attached to the housing 01, fluidly connecting the blowing means to said positive pressure chamber. The hub 13 further provides a fluid seal over the hollow motor shaft 03.1 of the motor 03, preventing fluid circulation of air through the hollow shaft 03.1 from and to the housing 01.

The metering disc 02 comprises a plurality of radially spaced holes 19 or other suitable seed retaining means on its outer region. The holes 19 utilize the pressure generated in the positive pressure chamber by the blowing means to capture seeds 07 from the seed reservoir 21 and retain them until the pressure is interrupted by a wheel 09 or other suitable seed releasing means, releasing the seed 07 from the holes 19 of the metering disc 02, preferably into a seed outlet 10.

In a preferred embodiment the wheel 09 comprises a device arranged to block or isolate the affected holes 19 from the pressure generated by the blowing means, causing the seed to be released from said affected hole 19. Preferably, the wheel 09 is made from a flexible material, like rubber or other polymeric material, and located on the side of the metering disc 02 opposite to the seeds 07, which can isolate a particular hole 19 from the pressure source.

The embodiment further comprises a suitable curved plate 08 or other singulating means to prevent the simultaneous retention and discharge of two or more seeds 07 from a single hole 19, by removing excess seeds and returning them to the seed reservoir 21. Additionally, the embodiment further comprises a toothed wheel 11 with a plurality of teeth or projections, or other suitable auxiliary ejector means, arranged in a cavity (not shown) within the housing 01, which doubles both as a cleaning device for cleaning and removing obstructions in the holes 19 and as an auxiliary means for releasing seeds 07 not properly released by the seed releasing wheel 09. Preferably, the toothed wheel 11 is made from flexible material, like rubber or other polymeric material.

In operation, seeds 07 captured by the metering disc 02, and not removed by the curved plate 08, are carried over to the wheel 09, which in turn releases the seeds 07 from the metering disc 02 and allows them to freely fall through a seed outlet 10, through a conducting means to an opened furrow on the soil or another section of the seeding equipment.

### Embodiment 5

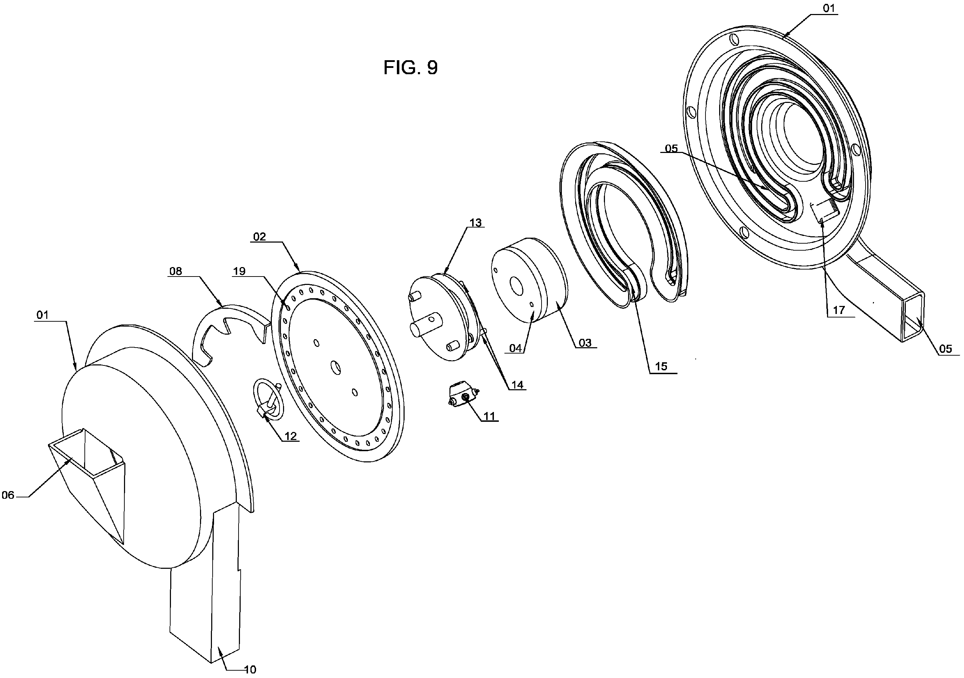

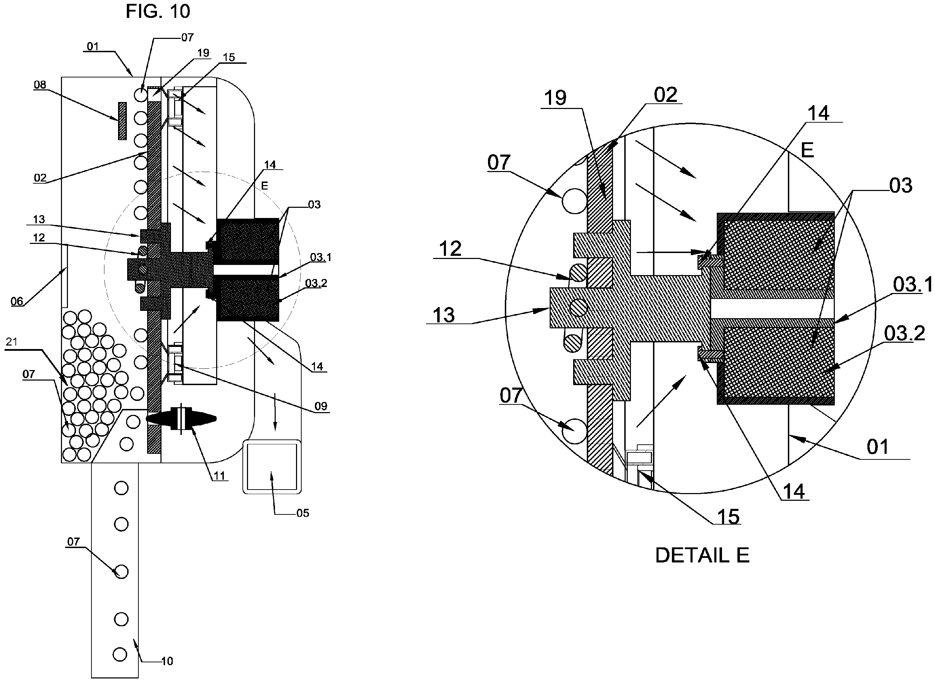

Figures 9 and 10 show a vacuum seed metering device according to a fifth embodiment of the present invention. Said vacuum seed metering device comprises a cylindrical housing 01, which houses a rotating metering disc 02 coupled about its central axis to a hollow rotor shaft 03.1 of a coaxially arranged motor 03 by means of a hub 13 or other suitable coupling means. The stator 03.2 of the motor 03 is fixed to the interior of the housing 01 by suitable fastening means (not shown). The hub 13 is coupled to the hollow motor shaft 03.1 by rods or pins 14 or other suitable fastening means. The metering disc 02 is coupled to the hub 13 by a cotter pin 12 or other suitable securing means.

A sealing member 15 is sealingly attached to the interior wall of the housing 01 and is sealingly pressed against a face of the metering disc 02, thus defining a vacuum chamber, while the remaining volume of the housing 01 defines an atmospheric pressure chamber. The sealing member 15 is made from a flexible material, like rubber or other polymeric material. The vacuum chamber is fluidly connected to a vacuum generation means (not shown), through an air extraction outlet 05 formed on or attached to the housing 01. The hub 13 further provides a fluid seal over the hollow motor shaft 03.1 of the motor 03, preventing fluid circulation of air through the hollow shaft 03.1 from and to the housing 01.

Seeds 07 are loaded into a reservoir 21 within the atmospheric pressure chamber through a seed inlet 06, which may or may not comprise a hopper and/or closure means (not shown).

The metering disc 02 comprises a plurality of radially spaced holes 19 or other suitable seed retaining means on its outer region. The sealing member 15 is arranged over the face of the metering disc 02 so as to overlap the vacuum chamber over some, but not all, the radially spaced holes 19.

The holes 19 utilize the vacuum in the overlapping vacuum chamber generated by the vacuum generating means to capture seeds 07 from the seed reservoir 21 and retain them until the vacuum is interrupted, releasing the seed 07 from the holes 19 of the metering disc 02, preferably into a seed outlet 10. Interruption of the vacuum affecting a specific hole 19 is achieved by rotating the metering disc 02 until said specific hole no longer overlaps with the vacuum chamber, thus releasing the captured seed.

The embodiment further comprises a suitable curved plate 08 or other singulating means to prevent the simultaneous retention and discharge of two or more seeds 07 from a single hole 19, by removing excess seeds and returning them to the seed reservoir 21. Additionally, the embodiment further comprises a toothed wheel 11 with a plurality of teeth or projections, or other suitable auxiliary ejector means, arranged in a cavity 17 within the housing 01, which doubles both as a cleaning device for cleaning and removing obstructions in the holes 19 and as an auxiliary means for releasing seeds 07 not properly released by the seed releasing mechanism. Preferably, the toothed wheel 11 is made from flexible material, like rubber or other polymeric material.

In operation, seeds 07 captured by the seed holes 19 in the metering disc 02, and not removed by the curved plate 08, are carried over by the rotating metering disc 02 until their respective seed holes 19 no longer overlaps with the vacuum chamber, thus releasing the seeds 07 from the metering disc 02 and allowing them to freely fall through a seed outlet 10, through a conducting means to an opened furrow on the soil or another section of the seeding equipment.

### Embodiment 6

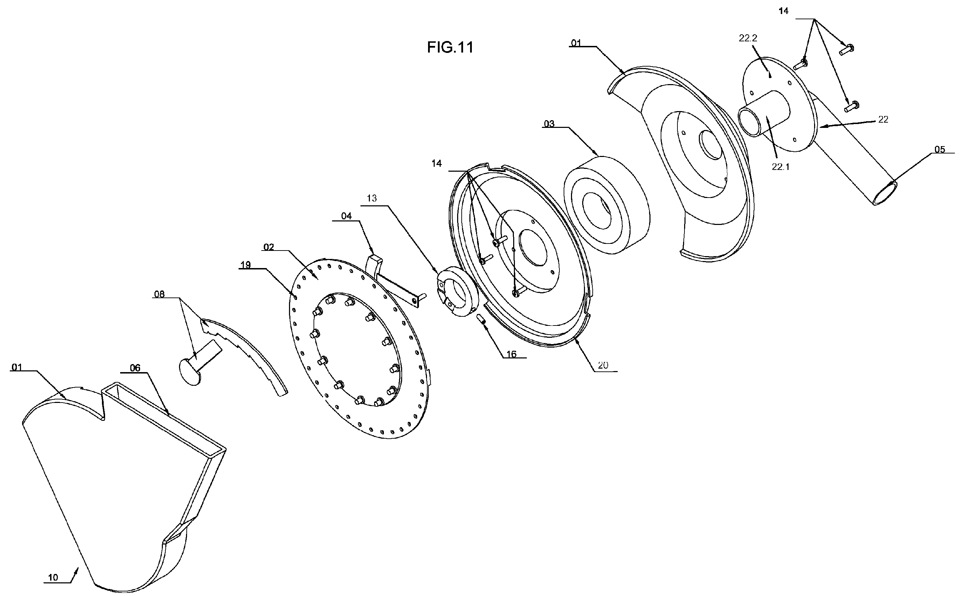

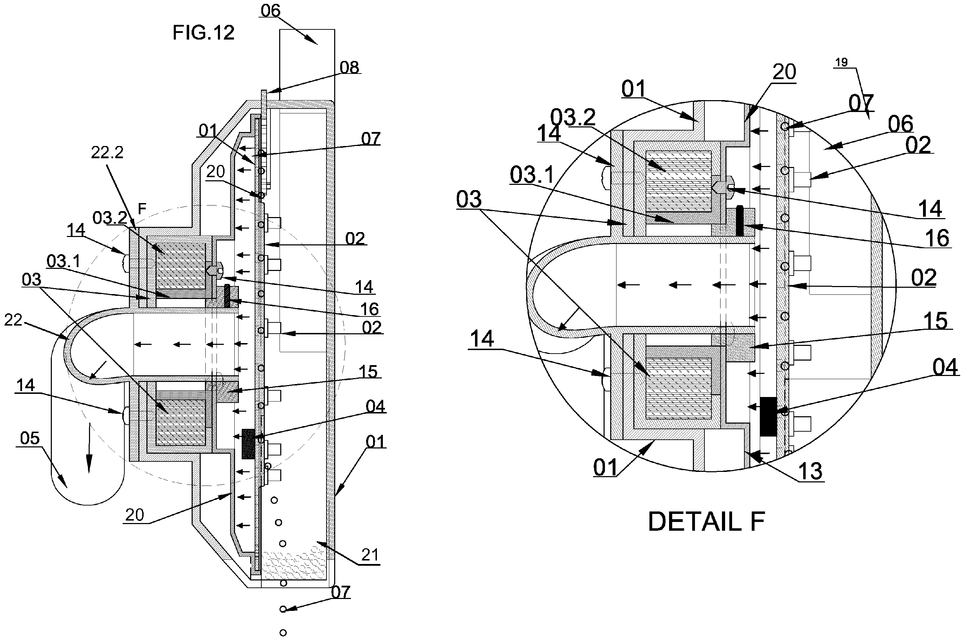

Figures 11 and 12 show a vacuum seed metering device according to a sixth embodiment of the present invention. Said vacuum seed metering device comprises a cylindrical housing 01, which houses a rotating metering disc 02 sealingly attached to an concave plate 20 coupled about its central axis to a hollow rotor shaft 03.1 of a coaxially arranged motor 03 by screws, bolts or other suitable fastening means 14. The stator 03.2 of the motor 03 is fixed to the interior of the housing 01 by suitable fastening means (not shown).

The metering disc 02 and the concave plate 20 define a rotating vacuum chamber, fluidly connected to a vacuum generation means (not shown) through a vacuum conduit 22. The remaining volume of the housing 01 defines an atmospheric pressure chamber. Seeds 07 are loaded into a reservoir 21 within the atmospheric pressure chamber through a seed inlet 06, which may or may not comprise a hopper and/or closure means (not shown).

The vacuum conduit 22, having a protruding hollow member 22.1, a flange 22.2 and an air extraction outlet 05, is sealingly attached by its flange 22.2 to the exterior of the housing 01 by means of screws 14, bolts or any other suitable fastening means. The protruding hollow member 22.1 of the vacuum conduit 22 is inserted coaxially and through the hollow motor shaft 03.1 of the motor 03 and into vacuum chamber defined by the metering disc 02 and the concave plate 20, providing fluid connection between said vacuum chamber and the vacuum generating means (not shown) through the air extraction outlet 05. It should be noted that the protruding hollow member 22.1 of the vacuum conduit 22 is not joined or attached to the hollow motor shaft 03.1 of the motor 03 and thus does not rotate .

The metering disc 02 comprises a plurality of radially spaced holes 19 or other suitable seed retaining means on its outer region. The holes 19 utilize the vacuum generated in the vacuum chamber by the vacuum generating means to capture seeds 07 from the seed reservoir 21 and retain them until the vacuum is interrupted by a plate 04 or other suitable seed releasing means, releasing the seed 07 from the holes 19 of the metering disc 02, preferably into a seed outlet 10.

The plate 04 is a plate made from a flexible material, like rubber or other polymeric material, located within the rotating vacuum chamber and non-rotatably attached to the protruding hollow member 22.1 of the vacuum conduit 22 by means of a hub 13. The hub 13 is joined to the protruding hollow member 22.1 of the vacuum conduit 22 by at least one rod or pin 16 or a suitable fastening means.

The embodiment further comprises a suitable curved plate 08 or other singulating means to prevent the simultaneous retention and discharge of two or more seeds 07 from a single hole 19, by removing excess seeds and returning them to the seed reservoir 21.

In operation, seeds 07 captured by the metering disc 02, and not removed by the curved plate 08, are carried over to the plate 04, which in turn releases the seeds 07 from the metering disc 02 and allows them to freely fall through a seed outlet 10, through a conducting means to an opened furrow on the soil or another section of the seeding equipment.

### Embodiment 7

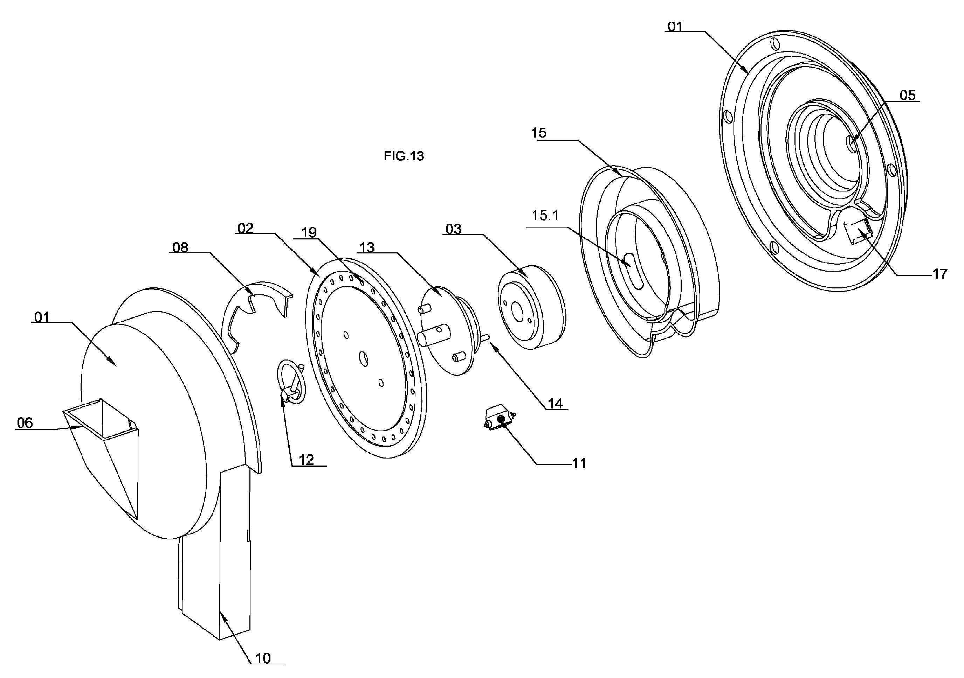

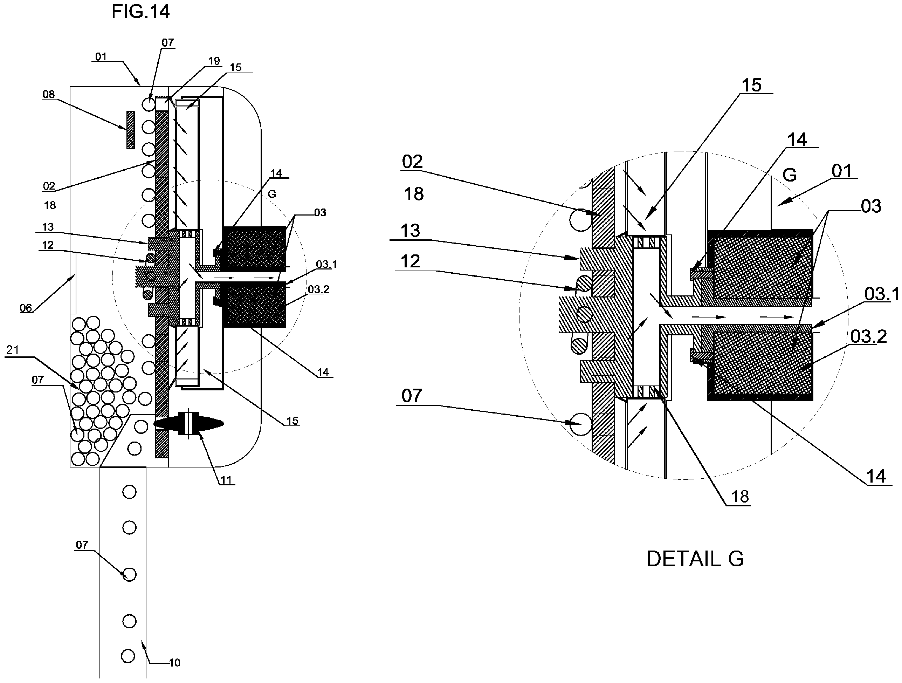

Figures 13 and 14 show a vacuum seed metering device according to a seventh embodiment of the present invention. Said vacuum seed metering device comprises a cylindrical housing 01, which houses a rotating metering disc 02 coupled about its central axis to a hollow rotor shaft 03.1 of a coaxially arranged motor 03 by means of a hollow hub 13 or other suitable coupling means which allow the passage of air through it. The stator 03.2 of the motor 03 is fixed to the interior of the housing 01 by suitable fastening means (not shown). The hollow hub 13 is coupled to the hollow motor shaft 03.1 by rods or pins 14 or other suitable fastening means. The metering disc 02 is coupled to the hub 13 by a cotter pin 12 or other suitable securing means.

A sealing member 15 is sealingly attached to the interior wall of the housing 01 and is sealingly pressed against a face of the metering disc 02, thus defining a vacuum chamber, while the remaining volume of the housing 01 defines an atmospheric pressure chamber. The sealing member 15 is made from a flexible material, like rubber or other polymeric material and contains an opening or orifice 15.1 formed on its inner wall. The vacuum chamber is fluidly connected to the hollow motor shaft 03.1 of the motor 03 through said opening or orifice 15.1 formed on the inner wall of the sealing member 15 and through a plurality of orifices or holes 18 formed in the hollow hub 13, which connects said hollow motor shaft 03.1 of said motor 03 to the metering disc 02. In turn, said hollow motor shaft 03.1 is fluidly connected to the vacuum generating means (not shown) through an air extraction outlet 05. Thus, fluid connection between the vacuum chamber and the vacuum generating means is achieved (not shown).

Seeds 07 are loaded into a reservoir 21 within the atmospheric pressure chamber through a seed inlet 06, which may or may not comprise a hopper and/or closure means (not shown).

The metering disc 02 comprises a plurality of radially spaced holes 19 or other suitable seed retaining means on its outer region. The sealing member 15 is arranged over the face of the metering disc 02 so as to overlap the vacuum chamber over some, but not all, the radially spaced holes 19.

The holes 19 utilize the vacuum in the overlapping vacuum chamber generated by the vacuum generating means to capture seeds 07 from the seed reservoir 21 and retain them until the vacuum is interrupted, releasing the seed 07 from the holes 19 of the metering disc 02, preferably into a seed outlet 10. Interruption of the vacuum affecting a specific hole 19 is achieved by rotating the metering disc 02 until said specific hole no longer overlaps with the vacuum chamber, thus releasing the captured seed.

The embodiment further comprises a suitable curved plate 08 or other singulating means to prevent the simultaneous retention and discharge of two or more seeds 07 from a single hole 19, by removing excess seeds and returning them to the seed reservoir 21. Additionally, the embodiment further comprises a toothed wheel 11 with a plurality of teeth or projections, or other suitable auxiliary ejector means, arranged in a cavity 17 within the housing 01, which doubles both as a cleaning device for cleaning and removing obstructions in the holes 19 and as an auxiliary means for releasing seeds 07 not properly released by the seed releasing mechanism. Preferably, the toothed wheel 11 is made from flexible material, like rubber or other polymeric material.

In operation, seeds 07 captured by the seed holes 19 in the metering disc 02, and not removed by the curved plate 08, are carried over by the rotating metering disc 02 until their respective seed holes 19 no longer overlaps with the vacuum chamber, thus releasing the seeds 07 from the metering disc 02 and allowing them to freely fall through a seed outlet 10, through a conducting means to an opened furrow on the soil or another section of the seeding equipment.

### Embodiment 8

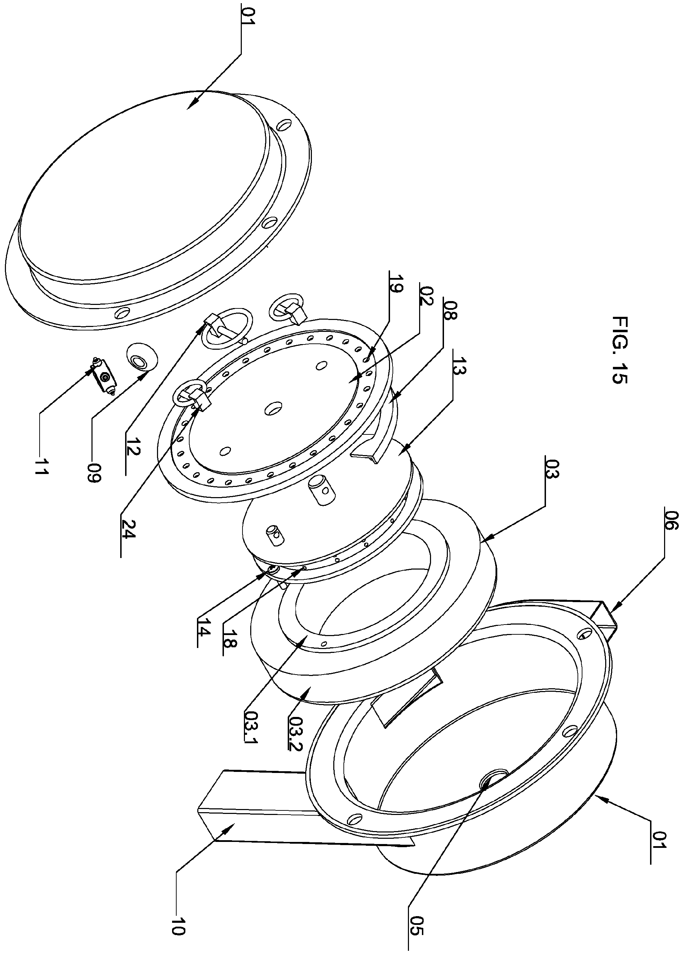

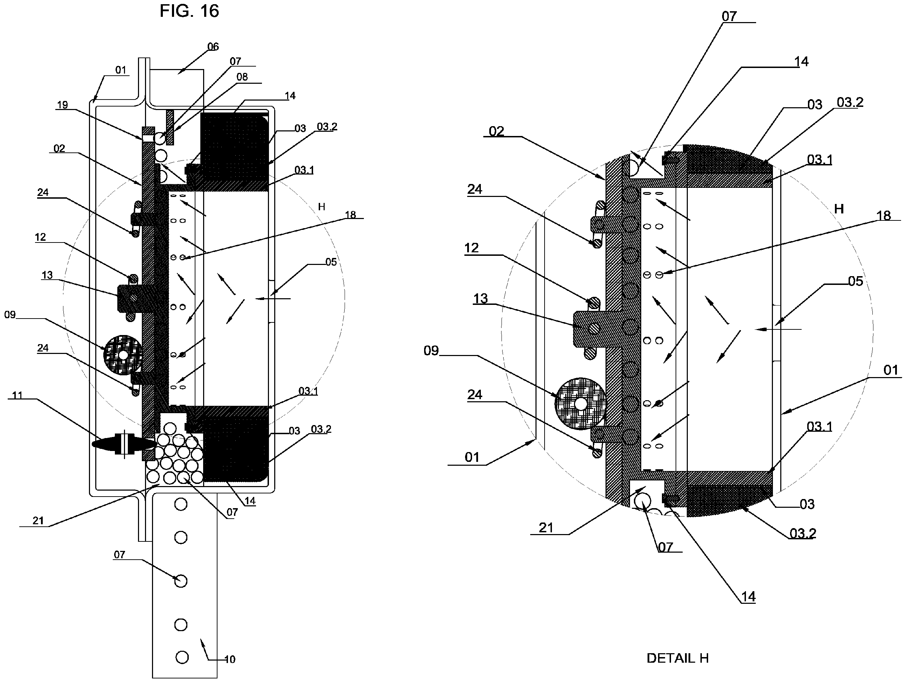

Figures 15 and 16 show a pressure seed metering device according to an eighth embodiment of the present invention. Said pressure seed metering device comprises a cylindrical housing 01, which houses a rotating metering disc 02 coaxially coupled about its central axis to an annular rotor 03.1 of a coaxially arranged large diameter torque motor 03 by means of a hollow hub 13 or other suitable coupling means which allow the passage of air through it. The annular stator 03.2 of the large diameter torque motor 03 is fixed to the interior of the housing 01 by suitable fastening means (not shown). The hollow hub 13 is coupled to the annular rotor 03.1 by rods or pins 14 or other suitable fastening means. The metering disc 02 is coupled to the hollow hub 13 by suitable securing means. In a preferred embodiment, the metering disc 02 is secured to the hollow hub 13 by means of a cotter pin 12 secured about a main central rod of the hollow hub 13 and a plurality of radially displaced lesser pins 24 secured about secondary fastening rods on the hub 13.

The metering disc 02 divides the housing 01 into two chambers; a positive pressure chamber, fluidly connected to a blowing means (not shown), and an atmospheric pressure chamber. Seeds 07 are loaded into a reservoir 21 within the positive pressure chamber through a seed inlet 06, which may or may not comprise a hopper and comprises sealing means (not shown). Pressure is created in the positive pressure chamber by the pressurization of air in said chamber by means of a blowing means (not shown), such as an air compressor, through a pressurized air inlet 05. Fluid connection between the blowing means and the positive pressure chamber in the housing 01 is achieved through a plurality of orifices or holes 18 in the hollow hub 13 which connects the annular rotor 03.1 of the large diameter torque motor 03 to the metering disc 02. In turn, the annular rotor 03.1 is fluidly connected to the pressurized air inlet 05, which is connected to the blowing means (not shown).

The metering disc 02 comprises a plurality of radially spaced holes 19 or other suitable seed retaining means on its outer region. The holes 19 utilize the pressure generated in the positive pressure chamber by the blowing means to capture seeds 07 from the seed reservoir 21 and retain them until the pressure is interrupted by a wheel 09 or other suitable seed releasing means, releasing the seed 07 from the holes 19 of the metering disc 02, preferably into a seed outlet 10.

In a preferred embodiment the wheel 09 comprises a device arranged to block or isolate the affected holes 19 from the pressure generated by the blowing means, causing the seed to be released from said affected hole 19. Preferably, the wheel 09 is made from a flexible material, like rubber or other polymeric material, and located on the side of the metering disc 02 opposite to the seeds 07, which can isolate a particular hole 19 from the pressure source.

The embodiment further comprises a suitable curved plate 08 or other singulating means to prevent the simultaneous retention and discharge of two or more seeds 07 from a single hole 19, by removing excess seeds and returning them to the seed reservoir 21. Additionally, the embodiment further comprises a toothed wheel 11 with a plurality of teeth or projections, or other suitable auxiliary ejector means, arranged in a cavity (not shown) within the housing 01, which doubles both as a cleaning device for cleaning and removing obstructions in the holes 19 and as an auxiliary means for releasing seeds 07 not properly released by the seed releasing wheel 09. Preferably, the toothed wheel 11 is made from flexible material, like rubber or other polymeric material.

In operation, seeds 07 captured by the metering disc 02, and not removed by the curved plate 08, are carried over to the wheel 09, which in turn releases the seeds 07 from the metering disc 02 and allows them to freely fall through a seed outlet 10, through a conducting means to an opened furrow on the soil or another section of the seeding equipment.

### Embodiment 9

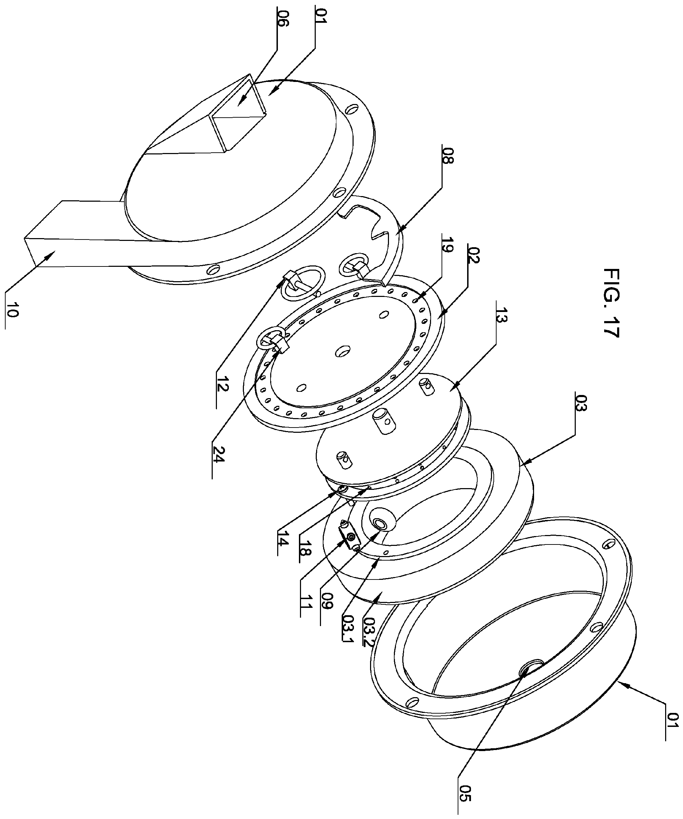

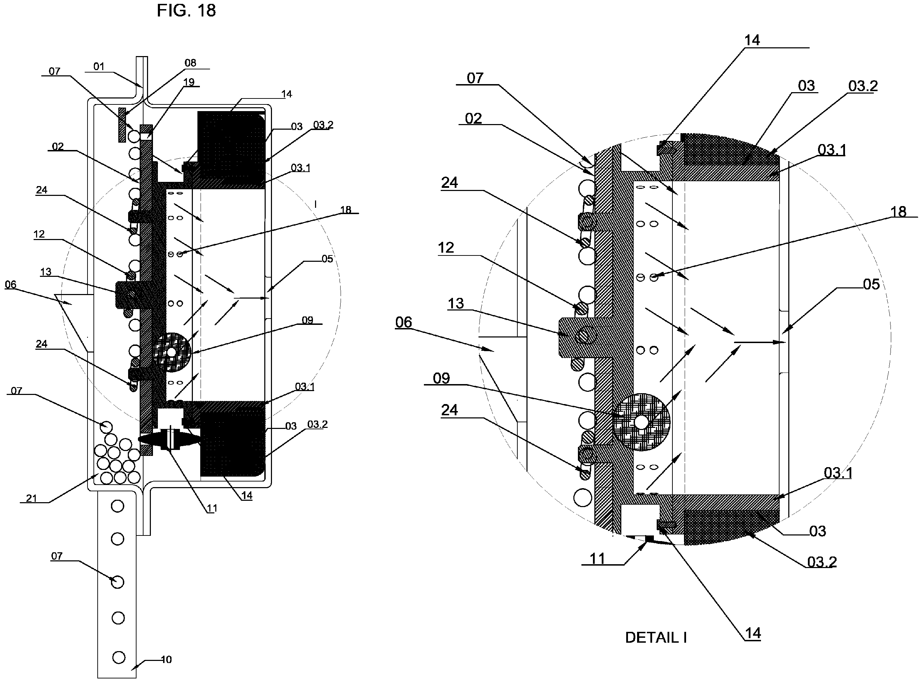

Figures 17 and 18 show a vacuum seed metering device according to an ninth embodiment of the present invention. Said vacuum seed metering device comprises a cylindrical housing 01, which houses a rotating metering disc 02 coaxially coupled about its central axis to an annular rotor 03.1 of a coaxially arranged large diameter torque motor 03 by means of a hollow hub 13 or other suitable coupling means which allow the passage of air through it. The annular stator 03.2 of the large diameter torque motor 03 is fixed to the interior of the housing 01 by suitable fastening means (not shown). The hollow hub 13 is coupled to the annular rotor 03.1 by rods or pins 14 or other suitable fastening means. The metering disc 02 is coupled to the hollow hub 13 by suitable securing means. In a preferred embodiment, the metering disc 02 is secured to the hollow hub 13 by means of a cotter pin 12 secured about a main central rod of the hollow hub 13 and a plurality of radially displaced lesser pins 24 secured about secondary fastening rods on the hub 13.

The metering disc 02 divides the housing 01 into two chambers; a vacuum chamber, fluidly connected to a vacuum generation means (not shown), and an atmospheric pressure chamber. Seeds 07 are loaded into a reservoir 21 within the atmospheric pressure chamber through a seed inlet 06, which may or may not comprise a hopper and/or closure means (not shown). Vacuum is created in the vacuum chamber by the extraction of air in said chamber by means of a vacuum generating means (not shown) through an air extraction outlet 05. Fluid connection between the vacuum generating means and the vacuum chamber in the housing 01 is achieved through a plurality of orifices or holes 18 in the hollow hub 13 which connects the annular rotor 03.1 of the large diameter torque motor 03 to the metering disc 02. In turn, the annular rotor 03.1 is fluidly connected to the air extraction outlet 05, which is connected to the vacuum generating means (not shown).

The metering disc 02 comprises a plurality of radially spaced holes 19 or other suitable seed retaining means on its outer region. The holes 19 utilize the vacuum generated in the vacuum chamber by the vacuum generating means to capture seeds 07 from the seed reservoir 21 and retain them until the vacuum is interrupted by a wheel 09 or other suitable seed releasing means, releasing the seed 07 from the holes 19 of the metering disc 02, preferably into a seed outlet 10.

In a preferred embodiment the wheel 09 comprises a device arranged to block or isolate the affected holes 19 from the vacuum generated by the vacuum generating means, causing the seed to be released from said affected hole 19. Preferably, the wheel 09 is made from a flexible material, like rubber or other polymeric material, and located on the side of the metering disc 02 opposite to the seeds 07, which can isolate a particular hole 19 from the vacuum source.

The embodiment further comprises a suitable curved plate 08 or other singulating means to prevent the simultaneous retention and discharge of two or more seeds 07 from a single hole 19, by removing excess seeds and returning them to the seed reservoir 21. Additionally, the embodiment further comprises a toothed wheel 11 with a plurality of teeth or projections, or other suitable auxiliary ejector means, arranged in a cavity 17 within the housing 01, which doubles both as a cleaning device for cleaning and removing obstructions in the holes 19 and as an auxiliary means for releasing seeds 07 not properly released by the seed releasing wheel 09. Preferably, the toothed wheel 11 is made from flexible material, like rubber or other polymeric material.

In operation, seeds 07 captured by the metering disc 02, and not removed by the curved plate 08, are carried over to the wheel 09, which in turn releases the seeds 07 from the metering disc 02 and allows them to freely fall through a seed outlet 10, through a conducting means to an opened furrow on the soil or another section of the seeding equipment.

The above embodiments should not to be taken as limiting examples of the invention, as the benefits of the application of a direct drive seed metering device driven by a DC brushless toroidal torque motor, as disclosed herein, in other embodiments of seed metering devices will be apparent to those skilled in the art. Thus, the invention is further suited for its application on other seed metering devices as, for example, devices without a pressure or vacuum source and which utilize other types of seed capturing, retaining and releasing means, such as teeth, cells, cradles and the like.

## Claims

1. Seed metering device for row crop sowing machines, also called seed planters, comprising
- a seed metering disc (02) rotatable about a central shaft, having a plurality of seed capturing and retaining means (19) for capturing and retaining the seeds (07),
- a motor (03), which drives the seed metering disc (02), toroidally shaped and coaxially coupled to the seed metering disc (02),
- releasing means (09) for releasing the seeds from the seed capturing and retaining means,
- conducting means (10) for conducting the released seeds onto the ground, and
- a housing (01) for containing and protecting the seed metering disc (02),
**characterized in that** the motor (03) is of the hollow-shaft type.

2. The metering device according to claim 1, wherein the seed capturing and retaining means are selected from the group comprising holes, cells or cradles located near the outer perimeter of the seed metering disc (02), and/or
wherein the seed capturing and retaining means consist of holes (19) located near the outer perimeter of the seed metering disc (02) and the hole size is determined by the type of seed to be sown, so as to be able to retain the seeds (07) in place until reaching the releasing means, and/or wherein the seed metering disc (02) is a cogwheel or gear, the teeth of which are the seed capturing and retaining means, where the teeth shape and the size of the gap between the teeth being determined by the type of seed to be sown, so as to be able to retain the seeds (07) in place until reaching the releasing means.

3. The metering device according to any one of the preceding claims, wherein the housing (01) containing the seed metering disc (02) forms a vacuum chamber together with one of the faces of the seed metering disc (02), the device being provided with vacuum generating means for lowering the air pressure on said face of the seed metering disc (02) so as to capture and retain the seeds (07) within the seed capturing and retaining means arranged on the face of the seed metering disc (02) opposite the vacuum chamber, and/or
wherein the housing (01) containing the seed metering disc (02) forms a high pressure chamber together with one of the faces of the seed metering disc (02), the device being provided with blowing means for increasing air pressure on said face of the seed metering disc (02) so as to capture and retain the seeds (07) within the seed capturing and retaining means arranged on the same face of the seed metering disc (02), and/or
wherein the device further comprises a flexible sealing member (15) contained within the housing (01), which is sealingly attached to the inner wall of the housing (01) and which is sealingly pressed against one face of the seed metering disc (02), thus defining a vacuum chamber, the device being provided with vacuum generating means for lowering the air pressure on said vacuum chamber so as to capture and retain the seeds (07) within the seed capturing and retaining means arranged on the face of the seed metering disc (02) opposite the vacuum chamber.

4. The metering device according to claim 2, wherein the device further comprises
a concave plate (20) within the housing (01), sealingly attached to one face of the seed metering disc (02), and coupled to the hollow shaft (03.1) of the motor (03), thus defining a rotatable vacuum chamber,
vacuum generating means,
a non-rotatable tube or conduit (22), non-rotatably attached to the housing (01), which passes through the housing (01) and the hollow shaft (03.1) of the motor (03) into the rotatable vacuum chamber, fluidly connecting the vacuum generating means to the rotatable vacuum chamber.

5. The metering device according to claim 3, wherein the motor (03) is coupled to the seed metering disc (02) by means of a hollow hub (13) or other suitable coupling means comprising a hollow shaft or tube, and wherein the hollow hub (13) is perforated (18), fluidly connecting the high pressure chamber or the vacuum chamber, where appropriate, to the hollow motor shaft (03.1) of the motor (03) coupled to said hollow hub (13).

6. The metering device according to claim 5, wherein the vacuum generating means or the blowing means are fluidly connected to the vacuum chamber or the high pressure chamber, where appropriate, through the hollow motor shaft (03.1) of the motor (03) and through the perforated hollow hub (13).

7. The metering device according to claim 3, wherein the vacuum generating means or the blowing means are fluidly connected to said vacuum chamber or high pressure chamber, where appropriate, through an opening or orifice (05) in the housing (01) in a position other than the hollow shaft (03.1) -eccentrically regarding the seed metering disc (02) - and wherein the coupling means coupling the motor (03) to the seed metering disc (02) does not allow fluid connection between the vacuum chamber or high pressure chamber, where appropriate, and the hollow shaft (03.1) of the motor (03).

8. The metering device according to claim 4, wherein the releasing means comprises a plate (04), fixed to the non-rotatable tube or conduit (22) and located within the rotatable vacuum chamber, which makes contact with a region of the face of the seed metering disc (02) inside the rotatable vacuum chamber, blocking the holes (19) of the seed capturing and retaining means and therefore interrupting the vacuum applied to the seeds (07) retained on the other face of the seed metering disc (02), making them drop into the conducting means (10) towards the ground.

9. The metering device according to claim 3, wherein the vacuum chamber does not simultaneously overlap with all the seed capturing and retaining means of the seed metering disc (02) and wherein the release of the seeds (07) from the holes (19) of the seed capturing and retaining means occurs when a particular hole (19) of the seed capturing and retaining means no longer overlaps with the vacuum chamber.

10. The metering device according to claim 3, wherein the releasing means (09) comprises a rotatable wheel (09) contacting the seed metering disc (02) on the face opposite the seeds capturing and retaining means, the wheel (09) blocking the holes (19) of the seed capturing and retaining means and therefore interrupting the vacuum or pressure applied to the retained seeds (07), making them drop into the conducting means (10) towards the ground.

11. The metering device according to any one of the preceding claims, wherein the motor (03) is housed within the housing (01), fixed to the inner surface of the housing wall, and/or
wherein the motor (03) is fixed to the outer surface of the housing wall, and/or
wherein the releasing means comprise stationary or mobile brushes that physically remove the seeds (07) from the seed capturing and retaining means.

12. The metering device according to any one of the preceding claims, wherein the device further comprises singulating means (08) for allowing only one seed (07) to be retained in each seed capturing and retaining means.

13. The metering device according to claim 12, wherein the singulating means (08) comprise a plate (08), parallel to the seed metering disc (02) and spaced apart so as to allow only one seed (07) to be retained in each seed capturing and retaining means.

14. The metering device according to any one of the preceding claims, wherein the conducting means (10) for conducting the released seeds (07) onto the ground comprises a tube for allowing the seeds (07) to freely reach the soil by gravity, into an opened furrow in the soil.

15. The metering device according to any one of claims 2 to 14, wherein the device comprises a rotatable toothed wheel (11) with a plurality of teeth or projections, that engage with the holes (19) of the seed capturing and retaining means as the seed metering disc (02) rotates, removing obstructions and releasing seeds (07) stuck in said holes (19).

## Patentansprüche

1. Saatgutdosiervorrichtung für Zeilenbewachsungssämaschinen, auch Saatgutpflanzer genannt, umfassend
- eine Saatgutdosierscheibe (02), die um eine zentrale Welle drehbar ist und die eine Mehrzahl von Saatguterfassungs- und Haltemittel (19) zum Erfassen und Halten des Saatguts (07) aufweist,
- einen Motor (03), der die Saatgutdosierscheibe (02) antreibt, der ringförmig ist und der koaxial mit der Saatgutdosierscheibe (02) gekoppelt ist,
- ein Freigabemittel (09) zum Freigeben des Saatguts von den Saatguterfassungs- und Haltemitteln,
- ein Leitungsmittel (10) zum Leiten des freigegebenen Saatguts auf den Boden, und
- ein Gehäuse (01) zum Aufnehmen und Schützen der Saatgutdosierscheibe (02),
**dadurch gekennzeichnet, dass** der Motor (03) vom Hohlwellentyp ist.

2. Dosiervorrichtung nach Anspruch 1, wobei die Saatguterfassungs- und Haltemittel ausgewählt sind aus der Gruppe, umfassend Löcher, Zellen oder Wiegen, die nahe dem äußeren Umfang der Saatgutdosierscheibe (02) angeordnet sind, und/oder
wobei die Saatguterfassungs- und Haltemittel aus Löchern (19) bestehen, die an dem äußeren Umfang der Saatgutdosierscheibe (02) angeordnet sind, und wobei die Lochgröße durch den Typ des Saatguts, das gesät werden soll, bestimmt wird, um zu ermöglichen, dass das Saatgut (07) am Platz gehalten wird, bis es das Freigabemittel erreicht, und/oder
wobei die Saatgutdosierscheibe (02) ein Kammrad oder ein Getriebe ist, dessen Zähne die Saatguterfassungs- und Haltemittel sind, wobei die Form der Zähne und die Größe der Lücke zwischen den Zähnen durch den Typ des Saatguts, das gesät werden soll, bestimmt wird, um zu ermöglichen, dass das Saatgut (07) am Platz gehalten wird, bis es das Freigabemittel erreicht.

3. Dosiervorrichtung nach einem der vorstehenden Ansprüche, wobei das Gehäuse (01), das die Saatgutdosierscheibe (02) enthält, zusammen mit einer der Seiten der Saatgutdosierscheibe (02) eine Vakuumkammer bildet, wobei die Vorrichtung mit Vakuumerzeugungsmitteln zum Senken des Luftdrucks auf der Seite der Saatgutdosierscheibe (02) versehen ist, um das Saatgut (07) innerhalb der Saatguterfassungs- und Haltemittel, die auf der Seite der Saatgutdosierscheibe (02), die der Vakuumkammer gegenüberliegt, angeordnet sind, zu erfassen und zu halten, und/oder
wobei das Gehäuse (01), das die Saatgutdosierscheibe (02) enthält, zusammen mit einer der Seiten der Saatgutdosierscheibe (02) eine Hochdruckkammer bildet, wobei die Vorrichtung mit Blasmitteln zum Erhöhen des Luftdrucks auf der Seite der Saatgutdosierscheibe (02) versehen ist, um das Saatgut (07) innerhalb der Saatguterfassungs- und Haltemittel, die auf der gleichen Seite der Saatgutdosierscheibe (02) angeordnet sind, zu erfassen und zu halten, und/oder
wobei die Vorrichtung weiter ein flexibles Dichtungselement (15) umfasst, das in dem Gehäuse (01) enthalten ist, das abdichtend an der Innenwand des Gehäuses (01) angebracht ist und das dichtend gegen eine Seite der Saatgutdosierscheibe (02) gedrückt wird, wodurch eine Vakuumkammer definiert wird, wobei die Vorrichtung mit einem Vakuumerzeugungsmittel zum Senken des Luftdrucks auf der Vakuumkammer versehen ist, um das Saatgut (07) innerhalb der Saatguterfassungs- und Haltemittel, die auf der Seite der Saatgutdosierscheibe (02), die der Vakuumkammer gegenüberliegt, angeordnet sind, zu erfassen und zu halten.

4. Dosiervorrichtung nach Anspruch 2, wobei die Vorrichtung weiter umfasst
eine konkave Platte (20) innerhalb des Gehäuses (01), die dichtend an einer Seite der Saatgutdosierscheibe (02) angebracht und mit der Hohlwelle (03.1) des Motors (03) gekoppelt ist, wodurch eine drehbare Vakuumkammer definiert wird,
ein Vakuumerzeugungsmittel,
eine nichtdrehbare Röhre oder Leitung (22), die nicht drehbar an dem Gehäuse (01) angebracht ist, die durch das Gehäuse (01) und die Hohlwelle (03.1) des Motors (03) in die drehbare Vakuumkammer verläuft und das Vakuumerzeugungsmittel mit der drehbaren Vakuumkammer in Fluidverbindung bringt.

5. Dosiervorrichtung nach Anspruch 3, wobei der Motor (03) mittels einer Hohlnabe (13) oder einem anderen geeigneten Kopplungsmittel, das eine Hohlwelle oder eine Röhre aufweist, mit der Saatgutdosierscheibe (02) gekoppelt ist und wobei die Hohlnabe (13) perforiert (18) ist und gegebenenfalls die Hochdruckkammer oder die Vakuumkammer mit der Hohlwelle (03.1) des Motors (03), der mit der Hohlnabe (13) gekoppelt ist, in Fluidverbindung bringt.

6. Dosiervorrichtung nach Anspruch 5, wobei die Vakuumerzeugungsmittel oder die Blasmittel durch die hohle Motorwelle (03.1) des Motors (03) und durch die perforierte Hohlnabe (13) mit gegebenenfalls der Hochdruckkammer oder der Vakuumkammer fluidverbunden sind.

7. Dosiervorrichtung nach Anspruch 3, wobei gegebenenfalls die Vakuumerzeugungsmittel oder die Blasmittel durch eine Öffnung oder eine Mündung (05) in dem Gehäuse (01), in einer anderen Position als die Hohlwelle (03.1) - exzentrisch in Bezug auf die Saatgutdosierscheibe (02) - mit der Vakuumkammer oder der Hochdruckkammer fluidverbunden sind und wobei das Kopplungsmittel, das den Motor (03) mit der Saatgutdosierscheibe (02) koppelt, keine Fluidverbindung zwischen gegebenenfalls der Vakuumkammer oder der Hochdruckkammer und der Hohlwelle (03.1) des Motors (03) ermöglicht.

8. Dosiervorrichtung nach Anspruch 4, wobei das Freigabemittel eine Platte (04) umfasst, die an der nichtdrehbaren Röhre oder Leitung (22) befestigt ist und die innerhalb der drehbaren Vakuumkammer angeordnet ist, wobei die Platte mit einem Bereich der Seite der Saatgutdosierscheibe (02) im Inneren der Vakuumkammer in Kontakt ist und die Löcher (19) der Saatguterfassungs- und Haltemittel blockiert und demzufolge das auf das Saatgut (07), das auf der anderen Seite der Saatgutdosierscheibe (02) gehalten wird, angewandte Vakuum unterbricht, was bewirkt, dass das Saatgut in das Leitungsmittel (10) in Richtung des Bodens fällt.

9. Dosiervorrichtung nach Anspruch 3, wobei die Vakuumkammer nicht gleichzeitig mit allen Saatguterfassungs- und Haltemitteln der Saatgutdosierscheibe (02) überlappt und wobei die Freigabe des Saatguts (07) von den Löchern (19) der Saatguterfassungs- und Haltemittel erfolgt, wenn ein bestimmtes Loch (19) der Saatguterfassungs- und Haltemittel nicht länger mit der Vakuumkammer überlappt.

10. Dosiervorrichtung nach Anspruch 3, wobei das Freigabemittel (09) ein drehbares Rad (09) umfasst, das die Saatgutdosierscheibe (02) auf der Seite, die den Saatguterfassungs- und Haltemitteln gegenüber liegt, kontaktiert, wobei das Rad (09) die Löcher (19) der Saatguterfassungs- und Haltemittel blockiert und demzufolge das auf das Saatgut (07) angewandte Vakuum oder den Hochdruck unterbricht, was bewirkt, dass das Saatgut in das Leitungsmittel (10) in Richtung des Bodens fällt.

11. Dosiervorrichtung nach einem der vorstehenden Ansprüche, wobei der Motor (03) innerhalb des Gehäuses (01) untergebracht ist und an der inneren Oberfläche der Gehäusewand befestigt ist und/oder
wobei der Motor (03) an der äußeren Oberfläche der Gehäusewand befestigt ist und/oder
wobei das Freigabemittel stationäre oder mobile Bürsten umfasst, die das Saatgut (07) physisch von den Saatguterfassungs- und Haltemitteln entfernen.

12. Dosiervorrichtung nach einem der vorstehenden Ansprüche, wobei die Vorrichtung weiter ein Vereinzelungsmittel (08) umfasst, das ermöglicht, dass nur ein Saatgut (07) in jedem Saatguterfassungs- und Haltemittel gehalten wird.

13. Dosiervorrichtung nach Anspruch 12, wobei das Vereinzelungsmittel (08) eine Platte (08) umfasst, die parallel und beabstandet zu der Saatgutdosierscheibe (02) ist, um zu ermöglichen, dass nur ein Saatgut (07) in jedem Saatguterfassungs- und Haltemittel gehalten wird.

14. Dosiervorrichtung nach einem der vorstehenden Ansprüche, wobei das Leitungsmittel (10) zum Leiten des freigegebenen Saatguts (07) auf den Boden eine Röhre umfasst, die ermöglicht, dass das Saatgut (07) durch Schwerkraft frei die Erde erreicht, in eine offene Furche in der Erde.

15. Dosiervorrichtung nach einem der Ansprüche 2 bis 14, wobei die Vorrichtung ein drehbares gezahntes Rad (11) mit einer Mehrzahl von Zähnen oder Vorsprüngen umfasst, die mit den Löchern (19) der Saatguterfassungs- und Haltemittel in Eingriff kommen, wenn sich die Saatgutdosierscheibe (02) dreht, wodurch Hindernisse entfernt werden und in den Löchern (19) steckengebliebenes Saatgut (07) freigegen wird.

## Revendications

1. Dispositif de dosage de graines pour des machines de semis de culture en lignes, également appelées ensemenceurs, comprenant
- un disque doseur de graines (02) pouvant tourner autour d'un arbre central, ayant une pluralité de moyens de capture et de retenue de graines (19) pour capturer et retenir les graines (07),
- un moteur (03), qui entraîne le disque doseur de graines (02), de forme toroïdale et couplé de manière coaxiale au disque doseur de graines (02),
- un moyen de libération (09) pour libérer les graines des moyens de capture et de retenue de graines,
- un moyen conducteur (10) pour conduire les graines libérées sur le sol, et
- un logement (01) pour contenir et protéger le disque doseur de graines (02),
**caractérisé en ce que** le moteur (03) est du type à arbre creux.

2. Dispositif de dosage selon la revendication 1, dans lequel les moyens de capture et de retenue de graines sont choisis dans le groupe comprenant des trous, des cellules ou des berceaux situés près du périmètre extérieur du disque doseur de graines (02), et/ou
dans lequel les moyens de capture et de retenue de graines sont constitués de trous (19) situés près du périmètre extérieur du disque doseur de graines (02) et la taille des trous est déterminée par le type de graine à semer, de façon à être capable de retenir les graines (07) en place jusqu'à ce qu'elles atteignent le moyen de libération, et/ou
dans lequel le disque doseur de graines (02) est un pignon ou un engrenage, dont les dents sont les moyens de capture et de retenue de graines, où la taille des dents et la forme de l'espace entre les dents étant déterminées par le type de graine à semer, de façon à être capable de retenir les graines (07) en place jusqu'à ce qu'elles atteignent le moyen de libération.

3. Dispositif de dosage selon l'une quelconque des revendications précédentes, dans lequel le logement (01) contenant le disque doseur de graines (02) forme une chambre à vide conjointement avec l'une des faces du disque doseur de graines (02), le dispositif étant doté d'un moyen de génération de vide pour abaisser la pression de l'air sur ladite face du disque doseur de graines (02) de façon à capturer et à retenir les graines (07) à l'intérieur des moyens de capture et de retenue de graines agencés sur la face du disque doseur de graines (02) opposée à la chambre à vide, et/ou
dans lequel le logement (01) contenant le disque doseur de graines (02) forme une chambre haute pression conjointement avec l'une des faces du disque doseur de graines (02), le dispositif étant doté d'un moyen de soufflage pour augmenter la pression de l'air sur ladite face du disque doseur de graines (02) de façon à capturer et à retenir les graines (07) à l'intérieur des moyens de capture et de retenue de graines agencés sur la même face du disque doseur de graines (02), et/ou
dans lequel le dispositif comprend en outre un élément d'étanchéité souple (15) contenu à l'intérieur du logement (01), qui est attaché de manière étanche à la paroi interne du logement (01) et qui est pressé de manière étanche contre une face du disque doseur de graines (02), définissant ainsi une chambre à vide, le dispositif étant doté d'un moyen de génération de vide pour abaisser la pression de l'air sur ladite chambre à vide de façon à capturer et à retenir les graines (07) à l'intérieur des moyens de capture et de retenue de graines agencés sur la face du disque doseur de graines (02) opposée à la chambre à vide.

4. Dispositif de dosage selon la revendication 2, dans lequel le dispositif comprend en outre
une plaque concave (20) à l'intérieur du logement (01), attachée de manière étanche à une face du disque doseur de graines (02), et couplée à l'arbre creux (03.1) du moteur (03), définissant ainsi une chambre à vide rotative,
un moyen de génération de vide,
un tube ou conduit non rotatif (22), attaché de manière non rotative au logement (01), qui passe à travers le logement (01) et l'arbre creux (03.1) du moteur (03) dans la chambre à vide rotative, reliant de manière fluidique le moyen de génération de vide à la chambre à vide rotative.

5. Dispositif de dosage selon la revendication 3, dans lequel le moteur (03) est couplé au disque doseur de graines (02) au moyen d'un moyeu creux (13) ou autre moyen de couplage adéquat comprenant un arbre ou tube creux, et dans lequel le moyeu creux (13) est perforé (18), reliant de manière fluidique la chambre haute pression ou la chambre à vide, le cas échéant, à l'arbre de moteur creux (03.1) du moteur (03) couplé audit moyeu creux (13).

6. Dispositif de dosage selon la revendication 5, dans lequel le moyen de génération de vide ou le moyen de soufflage sont reliés de manière fluidique à la chambre à vide ou à la chambre haute pression, le cas échéant, par l'intermédiaire de l'arbre de moteur creux (03.1) du moteur (03) et par l'intermédiaire du moyeu creux perforé (13).

7. Dispositif de dosage selon la revendication 3, dans lequel le moyen de génération de vide ou le moyen de soufflage sont reliés de manière fluidique à ladite chambre à vide ou chambre haute pression, le cas échéant, par l'intermédiaire d'une ouverture ou d'un orifice (05) dans le logement (01) dans une position autre que l'arbre creux (03.1) - de manière excentrique par rapport au disque doseur de graines (02) - et dans lequel le moyen de couplage couplant le moteur (03) au disque doseur de graines (02) ne permet pas la connexion fluidique entre la chambre à vide ou la chambre haute pression, le cas échéant, et l'arbre creux (03.1) du moteur (03).

8. Dispositif de dosage selon la revendication 4, dans lequel le moyen de libération comprend une plaque (04), fixée au tube ou au conduit non rotatif (22) et située à l'intérieur de la chambre à vide rotative, qui entre en contact avec une région de la face du disque doseur de graines (02) à l'intérieur de la chambre à vide rotative, en bloquant les trous (19) des moyens de capture et de retenue de graines et ainsi en interrompant le vide appliqué sur les graines (07) retenues sur l'autre face du disque doseur de graines (02), les faisant chuter dans le moyen conducteur (10) vers le sol.

9. Dispositif de dosage selon la revendication 3, dans lequel la chambre à vide n'est pas simultanément en chevauchement avec tous les moyens de capture et de retenue de graines du disque doseur de graines (02) et dans lequel la libération des graines (07) à partir des trous (19) des moyens de capture et de retenue de graines se produit lorsqu'un trou particulier (19) des moyens de capture et de retenue de graines n'est plus en chevauchement avec la chambre à vide.

10. Dispositif de dosage selon la revendication 3, dans lequel le moyen de libération (09) comprend une roue rotative (09) en contact avec le disque doseur de graines (02) sur la face opposée aux moyens de capture et de retenue de graines, la roue (09) bloquant les trous (19) des moyens de capture et de retenue de graines et ainsi interrompant le vide ou la pression appliqué(e) sur les graines retenues (07), les faisant chuter dans le moyen conducteur (10) vers le sol.

11. Dispositif de dosage selon l'une quelconque des revendications précédentes, dans lequel le moteur (03) est logé à l'intérieur du logement (01), fixé à la surface interne de la paroi du logement, et/ou
dans lequel le moteur (03) est fixé à la surface externe de la paroi du logement, et/ou
dans lequel le moyen de libération comprend des balais stationnaires ou mobiles qui retirent physiquement les graines (07) des moyens de capture et de retenue de graines.

12. Dispositif de dosage selon l'une quelconque des revendications précédentes, dans lequel le dispositif comprend en outre un moyen de séparation (08) pour permettre à une seule graine (07) d'être retenue dans chaque moyen de capture et de retenue de graines.

13. Dispositif de dosage selon la revendication 12, dans lequel le moyen de séparation (08) comprend une plaque (08), parallèle au disque doseur de graines (02) et espacée de façon à permettre à une seule graine (07) d'être retenue dans chaque moyen de capture et de retenue de graines.

14. Dispositif de dosage selon l'une quelconque des revendications précédentes, dans lequel le moyen conducteur (10) pour conduire les graines libérées (07) sur le sol comprend un tube pour permettre aux graines (07) d'atteindre librement le sol par pesanteur, dans un sillon ouvert dans le sol.

15. Dispositif de dosage selon l'une quelconque des revendications 2 à 14, dans lequel le dispositif comprend une roue dentée rotative (11) avec une pluralité de dents ou de saillies, qui viennent en prise avec les trous (19) des moyens de capture et de retenue de graines tandis que le disque doseur de graines (02) tourne, en éliminant les obstructions et en libérant les graines (07) coincées dans lesdits trous (19).
